Europäisches Patentamt

European Patent Office

Office européen des brevets

(11) Publication number: **0 067 009**

**B1**

# EUROPEAN PATENT SPECIFICATION

(45) Date of publication of patent specification: **07.08.85**

(21) Application number: **82302691.9**

(22) Date of filing: **25.05.82**

(51) Int. Cl.⁴: **H 01 B 7/28**

(54) Water-excluding filling composition.

(30) Priority: **26.05.81 US 266700**

(43) Date of publication of application:
**15.12.82 Bulletin 82/50**

(45) Publication of the grant of the patent:
**07.08.85 Bulletin 85/32**

(84) Designated Contracting States:
**AT BE CH DE FR IT LI NL SE**

(56) References cited:
**FR-A-2 472 820**
**US-A-3 875 323**
**US-A-3 893 961**
**US-A-3 893 962**
**US-A-3 903 013**
**US-A-3 996 413**

(73) Proprietor: **RAYCHEM CORPORATION**
**300 Constitution Drive**
**Menlo Park California 94025 (US)**

(72) Inventor: **Debbaut, Christian Arthur Marie L.**
**2052 Gold Street**
**Alviso California 95002 (US)**
Inventor: **Chan, Paul Sung**
**129 Cabrillo Street**
**San Francisco California 94118 (US)**

(74) Representative: **Jones, David Colin et al**
**Raychem Limited Intellectual Property Law**
**Department Swan House 37-39 High Holborn**
**London WC1 (GB)**

Courier Press, Leamington Spa, England.

## Description

This invention relates to hydrophobic mineral oil-based compositions and to the use of such compositions as filling compositions particularly for telecommunication cable splice cases and a method for producing such hydrophobic fixotropic compositions.

Hydrophobic filling compounds can be used to prevent moisture ingress into cavities, such as the voids or interstices in telecommunication cables between the individual insulated conductors. Such compositions typically contain petroleum greases and jellies (petrolatums) having melting points of approximately 40—80°C. The thermal stability of such fillers has been extended to higher temperatures by inclusion of thickeners and thixotropic gelling agents, such as polyethylene, polypropylene, waxes, hollow glass microspheres, clays and hydrophilic fumed silica. Reference may be made for example to U.S. Patent Nos. 4,246,435, P. F. Thompson (amorphous polypropylene, wax, polyethylene and an antioxidant in a paraffinic oil base) and 3,875,323, L. A. Bopp et al. (hydrophilic fumed silica thixotrope in petrolatum), and to "A New Low Dielectric Constant Filling Compound For Telecommunication Cable", L. E. Davis and N. I. Patel, International Wire and Cable Symposium Proceedings, 1980, pps, 59—65, (hollow glass microspheres in petroleum jelly), the disclosures of which are herein incorporated by reference.

Effective water-excluding filling compositions in general and for telecommunication cables in particular, should not migrate, phase separate, congeal or absorb water. Petrolatums tend to migrate. Filling compositions based on petrolatums typically undergo melt transitions accompanied by volume changes, at temperatures which telecommunications cables will be subjected to during use. Volume changes on temperature fluctuation above and below the melt transition tend to result in movement of the filling composition, thereby forming gaps and channels in the material, affording the opportunity for water to penetrate into the cable. Melt-induced phase separation of less viscous components of petrolatums, such as low molecular weight oils, also might occur, with the result that oily materials collect in pockets and drip from any break in the cable sheath.

Thickeners and thixotropes extend the thermal stability of petrolatums somewhat, but usually at the expense of flexibility, especially at low environmental temperatures. Moreover, compressive loads and shear stresses, such as from the flexing of cables and their components, contribute to phase separation of oily components.

Water permeation tests show that many commercially available filling compounds adsorb and/or absorb water and congeal. This is especially true of compositions containing clays and other hydrophilic gelling agents such as untreated, hydrophilic fumed silica. As the filling compounds are generally used in electrical systems, they should be electrically insulating, especially where they contact exposed wire, as in telecommunication cable splice cases and should have the lowest possible water content and the lowest possible tendency to adsorb or absorb water.

Filling compositions should be bacteria-resistant, yet ideally be physiologically non-toxic since they are often handled. Many commercial fillers are petrolatum-based and contain aromatics and unsaturated hydrocarbons, many of which are known toxins.

We have now discovered that a filling composition comprising a fluid mineral oil and a hydrophobic fumed silica and a polymeric thickener has excellent water-exclusion properties. Fumed silica can be rendered hydrophobic by treating its surface, and has excellent properties for use as a hydrophobic filling compound, without having the disadvantages of petrolatum-based compositions generally available. The use of a fumed silica thickener having a hydrophobic surface provides a filling composition having improved water-excluding properties and a very low water content compared to similar compositions containing untreated, hydrophilic fumed silica. Resistance to oil separation is improved by the addition of a low molecular weight polymeric thickener which is soluble in the mineral oil: depolymerized butyl rubber is preferred.

In one aspect, the invention provides a hydrophobic filling composition comprising: (a) a mineral oil; (b) 6 to 30 percent by weight, based on the total weight of the composition, of a hydrophobic fumed silica having a primary particle size of less than 0.05 micron; and (c) a polymeric thickener, such as depolymerized butyl rubber, substantially entirely dissolved in the mineral oil. The filling composition is preferably in the form of a thixotropic grease.

In another aspect, the invention provides a hydrophobic filling composition comprising:

(a) as a lattice a hydrophobic fumed silica; and

(b) dispersed throughout and supported by said lattice, a solution of a polymeric thickener in a mineral oil, the mineral oil having a pour point of −10°C or less and a viscosity of at least 300 SUS at 40°C;

said filling composition being a hydrophobic thixotropic grease.

The invention further comprises an assembly for environmental sealing a substrate, which comprises:

(a) a hollow recoverable article which can surround the substrate and which can be recovered substantially to enclose the substrate; and

(b) a filling composition according to the invention which can surround the substrate within the recoverable article to provide a seal between the substrate and the article when in its recovered form.

In another aspect, the invention provides a spliced cable, comprising:

(a) a splice core;

(b) an outer sheath surrounding the cable core and which has been partially removed to allow for splicing, thereby defining a splice zone;

(c) a splice case externally surrounding the splice zone and extending transversely for a distance on either side thereof so that the splice case overlaps the outer sheath; and

(d) the hydrophobic filling composition of the invention within the splice case and substantially sealing the core.

In a further aspect, the invention provides a filled cable, where a region between the core and jacket contains the composition of the invention. The composition may be localized along the cable to provide a cable block.

The invention still further provides an assembly for environmentally sealing a substrate where the composition of the invention is used in conjunction with a recoverable hollow article, such as a sleeve.

The invention may be better understood by referring to the detailed description of the invention when taken in conjunction with the accompanying drawings in which:

Fig. 1 illustrates a spliced telecommunication cable surrounded by a protective splice case.

Fig. 2 illustrates a section through the splice case and cable showing the hydrophobic filling composition substantially filling the interstices between the individual cable conductors.

Fig. 3 illustrates a comparmentalized protective bag surrounding a plurality of the conductors, which have been spliced using a modular connector and bundled together.

The hydrophobic filling compositions of this invention are based on mineral oil. Mineral oil is a liquid petroleum derivative refined therefrom by fractional distillation, generally at 330—390°C, into a base oil. Such oils, having a specific gravity in the range of 0.828—0.880 at 20°C are referred to as light mineral oils, while those in the range of 0.860—0.905 at 25°C are referred to as heavy mineral oils. In the practice of this invention, it is preferred to use a heavy mineral oil since the low molecular weight species present in light oils can have a deleterious effect on certain plastics materials in conjunction with which these filling compositions are advantageously used. The preferred mineral oils generally have a viscosity in the range of approximately 30—75 centistoke (150—355 Saybolt Universal Seconds, SUS) at about 40°C, and are typically characterized by pour point, which is preferably about −18°C or lower. They are distinguishable from petrolatums, which are residual materials and are semi-solid to solid mixtures of both solid and liquid hydrocarbons, containing aromatic, unsaturated aliphatic and alicyclic hydrocarbons as well as hydrocarbons of the methane series and being typically characterized by melting point.

Mineral oil may be further refined to finished white oils by removing all unsaturated and aromatic hydrocarbons, rendering them free of physiologically harmful ingredients. These homogeneous oils are mixtures of completely saturated aliphatic and alicyclic hydrocarbons. As such they are chemically and biologically inert. Because of their non-toxicity, white oils are particularly preferred for use in this invention.

The preferred mineral oil has the highest possible viscosity commensurate with the lowest pour point. This produces the thickest filling composition while retaining the greatest degree of low-temperature flexibility. For example, Kaydol#® , commercially available from Witco Chemical, is a USP grade white mineral oil with a kinematic viscosity at about 40°C of 345—355 Saybolt Universal Seconds and a maximum pour point of about −18°C. A viscosity at least about 300 SUS at about 40°C is preferred. It has an average molecular weight of 425 and a specific gravity of 0.880—0.895 (15.6°C). In order to further increase the viscosity while maintaining a low pour point a polymeric thickener such as depolymerized butyl or other rubber may be dissolved in the mineral oil. This is referred to in more detail below.

The fumed silica useful in this invention functions as a thickener. Useful water-excluding compositions may comprise mineral oil and from 6 to 30, preferably from 12 to 24 and especially from 12 to 16 percent by weight (based on the weight of the total composition) of this fumed silica. Hydrophobic fumed silica is generally produced in a two step process. First, a silicon compound, such as silicon tetrachloride, is hydrolyzed, for example, in an oxyhydrogen flame at 1,100°C, to produce a silicon dioxide aerosol of spherical primary particles having an average diameter of less than about 0.05 micron, typically about 0.015 micron. These primary particles tend to fuse together to form highly branched agglomerates. The surface of the particles contain silanol groups (—Si—OH) as well as siloxane groups (—Si—O—Si—O—). This submicroscopic particulate silica is known as fumed silica and has an exceptionally high specific surface area ranging from about 50 to about 380 m²/gm, and is useful as a thickening agent for liquids. It has a hydrophilic surface because of the silanol groups, which also provide means for joining adjacent particles into a gel network if the concentration is sufficiently high, believed to be due to a hydrogen bonding mechanism.

In the second step of the process, the silanol groups are reacted with a select organic reagent, capable of forming organo-silyl groups of the type which render the surface hydrophobic, such as dimethyl dichlorosilane. In fumed silica for use in the compositions of this invention, more than about 50% of the silanol groups should be reacted with the reagent and thereby rendered hydrophobic. A hydrophobic surface will not absorb water. This is desirable in order that the total water content of the composition be kept as low as possible preferably about 0.1% by weight or less, thereby promoting superior electrical insulation properties.

A suitable surface-treated fumed silica for use in the practice of this invention is that known by the trade mark, Cab-O-Sil® N70TS, commercially available from Cabot Corporation. It has a surface area of 70±15 m²/gm and an average primary particle size of 0.014 micron. Essentially all of the hydrophilic silanol groups are reported as having been replaced by organo-silyl groups, rendering the particles hydrophobic.

Other suitable surface-treated fumed silicas are those known by the trade marks, Aerosil® R972/300, R972/200, R972V, commercially available from Degussa Corporation, which differ in particle size and thus in surface area. It has a surface area of 120±30 m²/gm and an average particle size of 0.016 micron. Approximately 75% of the surface silanol groups are reported as having been replaced with organosilyl groups, rendering the particles hydrophobic.

The third part of the filling compositions, which is especially beneficial when the composition is likely to be subjected to compression, is a polymeric thickener which is substantially entirely dissolved in the mineral oil. It is desirable that a true solution be formed and that there be no phase separation over the temperature range required, in this case preferably from about −18°C to about 60°C. We prefer that the polymeric thickener is of low molecular weight, such as a depolymerized rubber, for example depolymerized butyl rubber. The polymeric thickener preferably has a Brookfield viscosity at 66°C of about 1,300,000. References in this specification to a depolymerized rubber include materials having the molecular weight distribution of a depolymerized rubber even if they are produced by techniques other than the degradation of a higher molecular weight rubber; such other techniques include controlled polymerization of monomer or oligomer, or removal from or addition to a polymer composition of appropriate molecular weight species to achieve the desired molecular weight distribution. Such materials when based on butyl rubber will generally contain from 80—98% by weight of isobutylene and 20—2% by weight of isoprene, 96% and 4% respectively being commercially available and preferred. The amount of this polymeric material is desirably from about 15—20% based on the total weight of the filling composition. A preferred material is that known by the trade mark, Kalene® 1300, commercially available from Hardman Incorporated.

Other low molecular weight polymeric thickeners that are compatible with mineral oils can be used. Where solubility in the mineral oil is not sufficient, the molecular weight of the polymeric material can be reduced, by for example, degradation. Alternatively, higher molecular weight components can be removed to give the desired molecular weight distribution.

The use of a separate thickener allows one to produce a high viscosity oil solution from an oil having a viscosity, at least 350 SUS (73.9 centi stoke) at about 40°C, while retaining a low pour point, preferably about −10°C or less. This combination of properties is generally not attainable using a single higher molecular weight oil. A high viscosity is necessary in order that the material has enough mechanical strength to remain dispersed throughout the silica matrix, preventing oil separation under compression: a material of lower viscosity would flow since the silica matrix would not be able to retain sufficient oil under mechanical stress. A higher viscosity could be produced by increasing the average molecular weight, but this would result in an increase pour point, which is a good measure of the ease with which the material can be worked. Since it is necessary that cables or splices be easily filled with the filling composition, preferably by squeezing or pumping from a cartridge, a low pour point is desirable. A combination of the desired properties is possible using a separate polymeric thickener which is soluble, preferably completely soluble, in the mineral oil. The average molecular weight of the mineral oil is preferably from 350—600, more preferably about 500, and that of the polymeric thickener from about from about 40000 to about 45000 more preferably about 42000 as determined by GPC. A higher molecular weight of the oil means a higher pour point, and at lower molecular weights viscosity is too low and damage to cables or other plastics materials can occur.

Another advantage of the butyl rubber or other polymeric thickener is that a composition having excellent adhesion and tack to polyolefin substrates, and having no adverse effect on the electrical and rheological properties of the other components of the composition can be produced.

A further benefit from the use of a polymeric thickener is that one can easily obtain highly satisfactory cone penetration figures. Cone penetration, measured according to ASTM D217, gives an indication of the hardness of the material and is conveniently measured at about −18°C and 23°C for the filling compositions of the present invention. The desired values are from 180—270 $10^{-1}$ mm at 23°C and > 150 $10^{-1}$ mm at −18°C, and the use of depolymerized butyl rubber can easily ensure that these figures are achieved. The use of a wax together with a mineral oil tends to give a small value at a lower temperature, due to crystallinity of wax at that temperature.

The invention is illustrated by the following Examples, which are summerized in Table I, Examples 1—9, being comparative Examples outside the scope of this invention. Formulations are given as parts by weight, and minor amounts, generally about 0.25%, of antioxidant Irganox® 1076 (trade mark), were added where appropriate. Tests results are listed.

The compositions were formulated in small batches as detailed in the Examples of Table I by weighing and mixing in a Warring blender until thoroughly dispersed. For each fumed silica, the minimum quantity required to thicken the mineral oil so that no phase separation of oil occured when tested at 60°±3°C for 24 hours determined. The test was a static drip test according to Federal Test Method Standard 791b, Method 321.2. Mineral oil so thickened was found to comprise a sufficiently thermally stable composition for telecommunication cable filling purposes. The compositions, whether containing treated or untreated fumed silica, could be heated to at least 80°C without any oil dripping.

Such a good thermal stability to phase separation of oil was unexpected. For N70TS, the minimum quantity was about 15.4 percent by weight and for R972, about 20 percent by weight. Cab-O-Sil® M5, available from Cabot Corporation, is an untreated hydrophilic fumed silica included for comparison purposes. It has a surface area of 200±25 m²/gm and an average primary particle size of 0.014 micron. The minimum quantity to thicken the mineral oil was about 10.0 percent by weight.

Test I, "Stability Under Compression", is a dynamic test in which 100 grams of filling composition are placed in a cylindrical tube having a 40 mesh metal screen bottom, which has been covered over by a piece of filter paper (Whatman, Ltd.'s No. 541 ashless) to prevent extrusion of the composition through the screen. A 4 pound (1.82 kg) weight is placed on top of the filling composition. After seven days, the amount of material that phase separates out and collects in a beaker placed under the tube is determined by weighing.

Test II, "Water Permeation Insulation Resistance (ohms at 500 volts DC)", measures the insulation resistance of the filling composition, after a 14-day exposure to water. Two copper electrodes (O.D. 1/10 inch, 0.254 cm), spaced 1/2 inch (1.27 cm) apart, are permanently mounted in a vertical, fixed relationship in the bottom section of a hollow cylindrical tube (I.D. 1 inch, 2.54 cm) with a sealed bottom. Filling composition is introduced to surround and cover the electrodes so that 1/10 inch (0.254 cm) of compound is above the tips. One inch (2.54 cm) of distilled water is introduced into the hollow cylinder, above the composition. The insulation resistance is measured with a General Radio Megohmmeter as a function of exposure time to give an indication of the composition's resistance to water penetration, i.e. its water-excluding capability. An insulation resistance of <10⁹ ohms @ 500 volts DC is considered a failure. Such a composition would be inadequate for telecommunication cable filling applications.

Test III, "Insulation at −10°C" is a determination of whether the composition has a viscosity which is sufficiently low so as to allow installation in conformance with a housing, for example, into a splice case, without preheating, at temperatures at least as low as −10°C. The viscosity at −10°C must be no greater than 90,000 Poise at 1 Hertz as measured on a Cone and Plate Rheometer. Results of the test are reported as "+", representing good installability at ±10°C, "−", representing inadequate installability and "+", representing poor installability.

Test IV gives a good indication of resistance to oil separation under high loads. Samples of the filling composition were placed in an ultracentrifuge and spun at 15,000 rpm for 2 hours. The figures given in Table I are percentage oil separation by weight. One can see that dramatically improved results are obtained with depolymerized butyl rubber, even at higher loadings. A much higher loading of the depolymerized butyl rubber than of the wax can be obtained with superior properties.

Referring to Examples 1, 2, 4 and 6, M5 (untreated) and N70TS (treated) were compared at their respective minimum fumed silica concentrations in order to demonstrate the superior water-excluding capability of the compositions according to this invention. The M5 compositions appeared to have a greater gel strength based on the stability under compression tests, but even an excess of hydrophilic fumed silica did not improve the water permeation results. M5 (untreated), Examples 1 and 2, failed Test II after 13 days. Example 6 contained less than the determined minimum of N70TS. Excessive phase separation under compression was noted and was expected, but the composition's water-excluding capability was high as was Example 4's. The compositions of Examples 4 and 6 have maintained an insulation resistance of >10¹³ ohms at 500 volts DC for over 8 months despite constant exposure to water. Example 4 demonstrates good resistance to phase separation and excellent water-excluding properties.

Compositions containing hydrophilic fumed silica were observed moreover to be destroyed by exposure to water. The hydrophilic particles transferred into the water phase. The originally clear to opalescent composition gradually whitened as water permeated. Electrical properties deteriorated accordingly. Exposed mineral oil coalesced into droplets which eventually floated to the surface of the water phase. The compositions of this invention, containing hydrophobic fumed silica, by comparison totally maintained their integrity.

Referring to Example 5, treated R972 required a surprisingly large minimal quantity to form a thermally stable composition, an approximate measure of gel strength. The high solids content reduced the composition's low temperature performance. Resistance to phase separation was marginal, but this hydrophobic fumed silica also had excellent water-excluding properties.

A microcrystalline wax can be added to the compositions of this invention to extend significantly their stability to phase separation under compression. The compositions may thus further comprise from about 0.01 to about 10, preferably from about 4 to about 8 and especially from about 5 to about 7 percent by weight (based on the weight of the total composition) of a microcrystalline wax. The wax is most preferably substantially aromatic-free so as to be non-toxic. When incorporating microcrystalline wax into the wax-containing compositions of this invention, the mineral oil is preferably heated to a temperature above the melting point of the microcrystalline wax but below the flash point of the mineral oil generally before adding the hydrophobic fumed silica and the wax.

Microcrystalline waxes typically are mixtures of normal paraffinic, isoparaffinic and naphthenic hydrocarbons. Small, thin crystals are thought to be dispersed in a large amount of amorphous material. They are obtained from petroleum refining. Paraffin wax and intermediate wax are removed as an overhead distillate, while the higher molecular weight microcrystalline wax remains as a residue.

Bareco Plastic Waxes, commercially available from Petrolite Corporation, are examples of waxes useful in the practice of this invention. They are much less crystalline than paraffin waxes, due to their lower concentration of n-paraffinic hydrocarbons (from about 20 to about 40 percent by weight, compared with about 90% or more for paraffin waxes) and their higher concentration of isoparaffinic and naphthenic hydrocarbons (from about 60 to about 80 percent by weight).

A preferred microcrystalline wax is Bareco's BE® Square 175. It is an aromatic-free microcrystalline wax which has a melting point of 83.3°C, has a density at 98.8°C of 0.7622 gm/cc and a viscosity at 98.8°C of 14.7 centistoke.

Referring to Examples 3, 7 and 9, in each case the presence of the wax improved stability under compression. This is believed to be due to the provision of an increased cage-like network around the dispersed oil globules. The wax notably did not improve the water-excluding ability of the hydrophilic fumed silica composition (compare Examples 1 and 3), wherein both compositions failed Test II after 13 days.

The hydrophobic filling composition may advantageously contain hollow glass microspheres having diameters within the range of about 20 to about 130 microns and wall thicknesses of about 0.5 to about 2.0 microns. Especially useful are those which have been surface-treated in a manner analogous to the treatment for the preferred fumed silica with a select organic reagent, capable of forming organo-silyl groups of the type which render the surface hydrophobic, such as dimethyl dichlorosilane. The advantage is that lower density formulations with improved electrical properties (dielectric constant $\geq 2.0 \leq 2.5$ and volume resistivity $> 10^{14}$ ohm cm) result, without any apparent deleterious effect on the gel strength. The overall density of a typical formulation is reduced from approximately 0.9 gm/cc to approximately 0.8 gm/cc which thus may reduce the overall weight of for example, a filled telecommunication cable or splice case.

Glass Bubbles, commercially available from 3M Company, are examples of the hollow glass microspheres useful in the practice of this invention. Compositions may further comprise from about 0.01 to about 20, preferably from about 5 to about 15 and especially from about 5 to about 10 percent by weight (based on the weight of the total composition) of hollow glass microspheres. Bubble type B23/500 has a nominal average particle density of 0.23 gm/cc, a nominal bulk density of 0.15 gm/cc and a strength as measured by the pressure for a 10% collapse of 500 psi (36.4 kg cm$^{-2}$). The water content is about $\leq 0.5\%$ by weight for this untreated material, believed to be due largely to surface-absorbed water, but can be reduced by surface treatments that render the surface hydrophobic as previously described.

Referring to Examples 8 and 9, in each example the presence of the microspheres further improved stability under compression compared to Examples 4 and 7 respectively, which did not contain microspheres. This is believed to be due to the provision of an increased network or structure around the oil globules. Water-excluding capability remained excellent, although low temperature flexibility decreased somewhat.

Examples 10—12 show compositions according to the invention, where a depolymerized butyl rubber has been added as the polymeric thickener.

The compositions of Examples 10—12 were produced in the following way. The mineral oil, Kaydol®, or depolymerized butyl rubber and an antioxidant were mixed at room temperature in a blender for about half an hour to produce a soft gel. This gel was then heated until a liquid was produced. A hydrophobic fumed silica (Cab-O-Sil® N70TS) was then added at a temperature of about 100°C and the mixture was blended for about 1 hour. This produced a lattice of the silica dispersed throughout the liquid oil and polymeric thickener. When the material was cooled to room temperature it had the form of a thixotropic grease, and effectively comprised a silica lattice dispersed throughout a soft gel. Where this process is to be applied to larger quantities, it may be desirable to heat the mineral oil before carrying out the initial mixing.

The hydrophobic filling compound may be tailored for the environment in which it is to be utilized. For example, telecommunication cables and splice cases contain a plurality of insulated conductors secured together into a cable core surrounded by a cable sheath which may comprise a plurality of layers. Splices between other electrical cores such as single and multi-core power cables, or between optical fibers or bundles of optical fibers may also be encased in the composition of the invention. The cable sheath and conductors are often cut for splicing purposes. Filling compounds for such cables and splice cases should not have a deleterious effect on any of the materials used in their construction. Thus it is desirable, for example, to include in the filling compound, a portion of an antioxidant, such as Irganox® 1076, commercially available from Ciba-Geigy and composed of Octadecyl B (3,5-t-butyl 4-hydroxy phenyl) propionate, for the purpose of preventing mass transfer (leaching) of antioxidants from the polymeric compositions of the cables and splice cases, as well as to prevent oxidation of the mineral oil. From about 0.001 to about 5, preferably from about 0.2 to about 0.3 percent by weight of an antioxidant which is compatible with the polymer compositions and the other component materials is useful in the practice of this invention.

TABLE I

| Example Number: | 1 | 2 | 3 | 4 | 5 | 6 | 7 | 8 | 9 | 10 | 11 | 12 |
|---|---|---|---|---|---|---|---|---|---|---|---|---|
| **Materials (parts by weight):** | | | | | | | | | | | | |
| Kaydol#®, Mineral Oil | 85 | 85 | 85 | 85 | 85 | 85 | 85 | 85 | 85 | 58 | 68 | 78 |
| Cab-O-Sil® M5 (100% silanol, hydrophilic surface) | 9.4* | 15 | 9.4 | | | | | | | | | |
| Cab-O-Sil® N70TS (0% silanol, hydrophobic surface, branched) | | | | 15* | | 9.4 | 15 | 15 | 15 | 12 | 12 | 12 |
| Aerosil® R972 (25% silanol, hydrophobic surface) | | | | | 21./3* | | | | | | | |
| Bareco® BE Square 175, Plastic Wax | | | 6.3 | | | | 6.3 | | 6.3 | | | |
| 3M Glass Bubbles, (B23/500 untreated) | | | | | | | | 11.1 | 11.1 | | | |
| Depolymerized Butyl Rubber | | | | | | | | | | 30 | 20 | 10 |
| **Test Results:** | | | | | | | | | | | | |
| I Stability Under Compression (gms oil/100 gms) | 1.0 | 0.2 | 0.3 | 1.4 | 2.9 | 8.5 | 0.2 | 1.0 | 0.0 | 0.0 | 0.0 | 0.0 |
| II Water Permeation, Insulation Resistance (ohms at 500v DC) | $<10^6$ | $<10^6$ | $>10^6$ | $>10^{13}$ | $>10^{13}$ | $>10^{13}$ | $>10^{13}$ | $>10^{13}$ | $>10^{13}$ | $>10^{13}$ | $>10^{13}$ | $>10^{13}$ |
| III Installation at −10°C | + | + | ± | + | ± | + | ± | ± | ± | + | + | + |
| IV Ultracentrifuge Oil Separation 2 hrs at 15000 rpm (%) | >5 | >5 | >5 | >5 | >5 | >5 | >5 | >5 | >5 | <0.3 | <0.3 | <0.3 |

\* The asterisk indicates the minimum quantity of fumed silica required to thicken the Kaydol so that no phase separation of oil occurs when tested at 60°C over 24 hours.

Mineral oils frequently contain additives such as antioxidants. Kaydol®, for example, is stabilized with Vitamin E by its manufacturer, Witco Chemical. Pour point depressants, such as polymethacrylates, are sometimes useful for extending the usefulness of oils to lower temperatures.

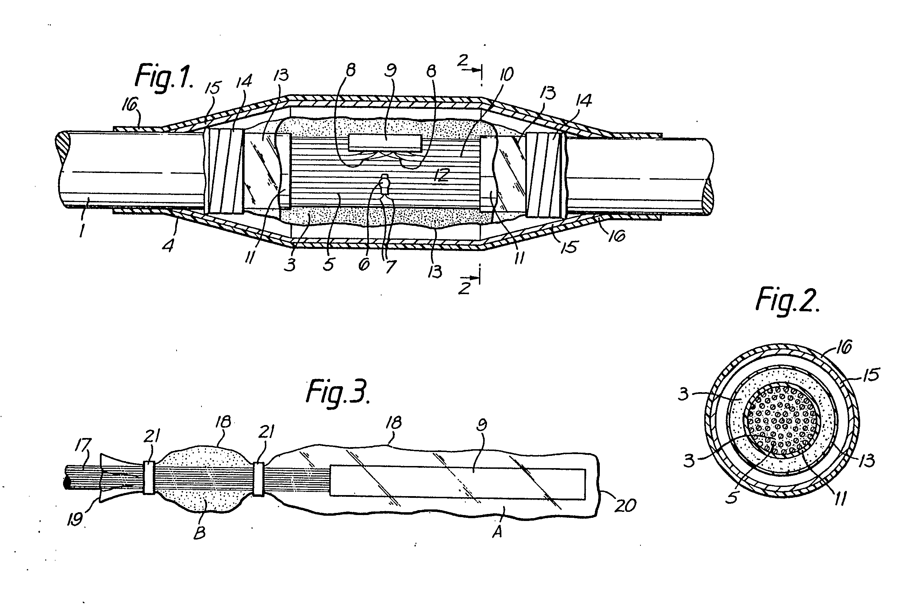

Referring to the drawing, Figure 1 is a schematic illustration of a spliced telecommunication cable 1 showing a hydrophobic filling composition 3 according to this invention within a splice case 4 and substantially filling the interstices between insulated conductors 5. The filled interstices are more clearly shown in Figure 2 which is a cross-sectional illustration of the spliced cable of Figure 1 along the line 2—2.

With continuing reference to Figure 1, the insulated conductors 5 are shown as having been spliced. As an example, a pair of cut insulated conductors are joined in a discrete type connector 6. Discrete connectors 6 are devices into which the pair of cut insulated conductors 7 are inserted. A crimping means pierces through the insulation and makes electrical contact with the conductors 7, thereby forming a splice, without necessitating removal of a portion of the insulation. As a further example, a plurality of pairs of insulated conductors 8 are spliced in a modular type connector 9, which similarly forms a splice between conductor pairs.

The telecommunication cable 1 of Figure 1 comprises a plurality of insulated conductors 5 which are assembled into a cable core 10. The cable core 10 is surrounded by a protective cable sheath 11. The cable sheath 11 may comprise a plurality of layers (not shown). A portion of the cable sheath 11 usually must be removed to allow for splicing of the conductors 5. The area occupied by the exposed conductors 5, between the portions of cable sheath 11 which have been removed, is called a splice zone 12.

The splice case 4 shown in Figure 1, comprises in this example, although not intended as a limitation on this invention, a polymeric wrapper 13 which serves as a containing means for the hydrophobic filling compositions 3 of this invention. A sheet of polymeric wrapper 13 is wrapped around the splice zone 12 so that its ends extend over the cable sheaths 11 and are secured by, for example, a layer of mastic (not shown) and by tape wraps 14. This serves also to provide a dam or containing means for the filling composition 3 which is then inserted into the polymeric wrapper 13 by appropriate means. The filling composition 3 is usually then massaged by hand so that it substantially fills the interstices between the conductors 5, especially in and around the splices.

The splice case 4 of Figure 1, also comprises a liner 15 which serves to provide strength and to dissipate heat. A polymeric outer sleeve 16 is shown, which was originally recoverable and which has been heated to a temperature beyond its recovery temperature or otherwise treated so that it has shrunk around the assembly, to provide a protective outer shield for the splice case 4. If an end of either cable 1 is accessible, for example when an entirely new splice is being made, the sleeve 16 may be tubular; in many instances however where an old splice is to be repaired there will be no free end over which a tubular sleeve may be slid, and a wrap-around sleeve is then desirably used. The composition of the invention may also be used in conjunction with other hollow recoverable articles such as caps or boots.

Referring to Figure 3, an alternate or additional method of containing hydrophobic filling compound to protect a splice from water penetration is shown. A modular type connector 9 as an example, although any splicing means is within the scope of this invention, has been used to splice together a plurality of pairs of insulated conductors 8 which are collected into a bundle 17. A protective bag 18, having an open end 19 and a closed end 20, is placed over the bundle 17, i.e. one bundle of spliced conductors being inserted through the open end of each bag and protruding therefrom.

The bag 18 should be mineral oil resistant and be able to contain the hydrophobic filling compounds 3 of this invention. For example, a bag may be formed by heat-sealing a laminated sheet comprising an inner layer of Surlyn® (a trade mark for an ionomer resin from DuPont which softens at about 71°C) and an outer layer of Nylon sheet having a melting point which is about 100°C above that of the inner layer.

The protective bag 18 is divided into at least two compartments, here A and B, by a securing means. The securing means 21 comprises at least two ties, which may be, for example, a pair of locking tie wraps. Compartment A, a first compartment near the closed end, contains at least the splices of the bundle of conductors selected. Compartment B, a second compartment, is positioned between the first compartment and the open end.

Hydrophobic filling composition 3 is introduced into at least one of the compartments A and B as they are formed by the securing means 21. This provides a uniquely superior water-excluding means which can withstand a large head of water as will be described below.

The protective bag 20 of Figure 3 or a plurality of protective bags 20 may be used in conjunction with the splice case 4 of Figure 1 to protect the splices. This allows the total amount of hydrophobic filling composition 3 used to be greatly reduced. It may, for example, be possible to fill only compartment B, although some users might prefer to have all compartments (A and B) filled as well as the space within the filling wrapper 13.

The hydrophobic filling composition of Table I, Example 7, was inserted into the protective bagging assembly of Figure 3 in which only compartment B was filled with the composition 3. The assembly was immersed in water in a pressure vessel at 50 pounds per square inch (3.64 kg cm$^{-2}$) gauge for seven days. No water penetrated.

The preferred embodiments of this invention have been illustrated and described, but changes and modifications can be made, and some features can be used in different combinations without departing from the invention as defined in the claims.

## Claims

1. A hydrophobic filling composition, comprising:

(a) a mineral oil;

(b) 6 to 30% by weight, based on the total weight of the composition, of a hydrophobic fumed silica having a primary particle size of less than 0.05 micron; and

(c) a polymeric thickener substantially entirely dissolved in the mineral oil.

2. A composition according to Claim 1, which comprises from 12 to 24% by weight of the silica.

3. A composition according to Claim 1 or 2, in which the mineral oil consists essentially of saturated hydrocarbon and is substantially aromatic-free.

4. A composition according to Claim 1, 2 or 3, which further comprises from 0.01 to 10% by weight of microcrystalline wax.

5. A composition according to any preceding claim, which further comprises from 0.01 to 20% by weight of hydrophobic glass microspheres.

6. A composition according to Claim 1, in which the polymeric thickener comprises a depolymerized rubber.

7. A composition according to Claim 6, in which the polymeric thickener comprises a depolymerized butyl rubber.

8. A composition according to Claim 7, in which the polymeric thickener is a copolymer which comprises from 80 to 98% by weight of isobutylene and from 2 to 20% by weight of isoprene.

9. A composition according to Claim 1, which is comprised of at least 5% by weight of the polymeric thickener.

10. A composition according to Claim 9, which is comprised of from 10 to 30% by weight of the polymeric thickener.

11. A composition according to any preceding Claim, in which the drip point is 80°C or greater.

12. A composition according to any preceding Claim, having a viscosity of 30,000 poise or less at 1 Hertz and at −10°C.

13. A composition according to any preceding Claim, having a water content of 0.1% by weight or less.

14. A composition according to any preceding Claim, which additionally comprises an antioxidant.

15. A hydrophobic filling composition, comprising:

(a) as a lattice a hydrophobic fumed silica; and

(b) dispersed throughout and supported by said lattice, a solution of a polymeric thickener in a mineral oil, the mineral oil having a pour point of −10°C or less and a viscosity of at least 300 SUS (63.4 centistoke) at 40°C;

said filling composition being a hydrophobic thixotropic grease.

16. A composition according to Claim 15, which comprises 12—24% by weight of said silica.

17. A composition according to Claim 15 or 16, in which said silica has a primary particle size of less than 0.05 micron.

18. A composition according to Claim 15, 16 or 17, in which said mineral oil is a heavy mineral oil having an average molecular weight of 400 to 450.

19. A composition according to any of Claims 15—18, in which said polymeric thickener has an average molecular weight of from 40000 to 45000.

20. A composition according to any of claims 15—19, in which said polymeric thickener comprises a depolymerized rubber.

21. A composition according to claim 20, in which said polymeric thickener is a depolymerized butyl rubber.

22. A composition according to any of Claims 15—21, in which said polymeric thickener has a Brookfield viscosity at 66°C of about 1,300,000.

23. A composition according to any of Claims 15—22, which is comprised of from at least 5% by weight of said polymeric thickener.

24. A composition according to Claim 23, which is comprised of from 10 to 30% by weight of the polymeric thickener.

25. A composition according to any of Claims 1—14, in the form of a hydrophobic thixotropic grease.

26. A composition according to any of Claims 15—25, which additionally comprises an antioxidant.

27. A spliced cable comprising:

(a) a spliced core;

(b) an outer sheath surrounding the core and which has been partially removed to allow for splicing, thereby defining a splice zone;

(c) a splice case externally surrounding the splice zone and extending transversely for a distance on either side thereof so that the splice case overlaps the outer sheath; and

(d) a hydrophobic filling composition according to any of claims 1—26, within the splice case and substantially sealing the cores.

28. A spliced cable according to Claim 27, in which the core is at least one optical fiber.

29. A spliced cable according to Claim 27, in which the core is electrically conductive.

30. A spliced cable according to Claim 29, in which the core comprises a plurality of electrical conductors.

31. A spliced cable according to Claim 27, 28 or 29, in which the splice case is a recovered polymeric sleeve.

32. A filled cable which comprises;

(a) a core;

(b) a sheath surrounding the core;

(c) a filling composition according to any of Claims 1—26 surrounding the core and within the sheath.

33. A filled cable according to Claim 32, in which the filling composition is localized along the length of the cable to provide a cable block.

34. An assembly for environmentally sealing a substrate, which comprises:

(a) a hollow recoverable article which can surround the substrate and which can be recovered substantially to enclose the substrate; and

(b) a filling composition according to any of Claims 1—26, which can surround the substrate within the recoverable article to provide a seal between the substrate and the article when in its recovered form.

35. An assembly according to Claim 34, in which the recoverable hollow article is a sleeve.

36. An assembly according to Claim 34, in which the recoverable article is heat-recoverable.

37. A method of producing a hydrophobic thixotropic grease which comprises:

(a) producing a solution by dissolving a polymeric thickener in a mineral oil having a viscosity of at least 300 SUS at 40°C and a pour point of −10°C or less;

(b) adding to the solution a hydrophobic fumed silica; and

(c) mixing with shearing the solution and silica to cause the silica to form a lattice throughout which the solution is dispersed, and by which it is supported.

38. A method according to Claim 37, in which the polymeric thickener is a depolymerized butyl rubber.

39. A method according to Claim 38, in which the mixing with shearing is carried out at a temperature above 80°C.

40. A method according to Claim 39, in which step (a) is carried out by mixing the oil and the polymeric thickener at a first temperature to produce a soft gel, said soft gel is heated to a second temperature to produce a liquid solution, and step (b) is carried out at the second temperature.

**Patentansprüche**

1. Hydrophobe Füllzusammensetzung, ethaltend:

a) ein Mineralöl;

b) 6 bis 30 Gew.-%, basierend auf dem Gesamtgewicht der Zusammenzetzung, eines hydrophoben pyrogenen Siliziumdioxids mit einer primären Teilchengröße von weniger als 0,05 Mikron; und

c) ein polymeres Verdickungsmittel, das im wesentlichen vollständig in dem Mineralöl gelöst ist.

2. Zusammensetzung nach Anspruch 1, die 12 bis 24 Gew.-% des Siliziumdioxids enthält.

3. Zusammensetzung nach Anspruch 1 oder 2, in der das Mineralöl im wesentlichen aus gesättigtem Kohlenwasserstoff besteht und im wesentlichen frei von Aromaten ist.

4. Zusammensetzung nach Anspruch 1, 2 oder 3, die außerdem 0,01 bis 10 Gew.-% mikrokristallines Wachs enthält.

5. Zusammensetzung nach einem der vorhergehenden Ansprüche, die außerdem 0,01 bis 20 Gew.-% hydrophobe Glas-Mikrosphären enthält.

6. Zusammensetzung nach Anspruch 1, in der das polymere Verdickungsmittel einen depolymerisierten Kautschuk umfaßt.

7. Zusammensetzung nach Anspruch 6, in der das polymere Verdickungsmittel einen depolymerisierten Butylkautschuk umfaßt.

8. Zusammensetzung nach Anspruch 7, in der das polymere Verdickungsmittel ein Copolymeres ist, das 80 bis 98 Gew.-% Isobutylen und 2 bis 20 Gew.-% Isopren umfaßt.

9. Zusammensetzung nach Anspruch 1, die aus mindestens 5 Gew.-% des polymeren Verdickungsmittels besteht.

10. Zusammensetzung nach Anspruch 9, die aus 10 bis 30 Gew.-% des polymeren Verdickungsmittels besteht.

11. Zusammensetzung nach einem der vorhergehenden Ansprüche, in der der Tropfpunkt 80°C oder größer ist.

12. Zusammensetzung nach einem der vorhergehenden Ansprüche, mit einer Viskosität von 30 000 Poise oder weniger bei 1 Hertz und bei −10°C.

13. Zusammensetzung nach einem der vorhergehenden Ansprüche, mit einem Wassergehalt von 0,1 Gew.-% oder weniger.

14. Zusammensetzung nach einem der vorhergehenden Ansprüche, die außerdem ein Antioxidans enthält.

15. Hydrophobe Füllzusammensetzung, enthaltend:

a) als ein Gitterwerk, ein hydrophobes pyrogenes Siliziumdioxid; und

b) gänzlich dispergiert durch das, und getragen auf dem Gitterwerk, eine Lösung eines polymeren Verdickungsmittels in einem Mineralöl, wobei das Mineralöl einen Fließpunkt von −10°C oder weniger und eine Viskosität von mindestens 300 SUS (63,4 Centistokes) bei 40°C hat; wobei die Füllzusammensetzung ein hydrophobes thixotropes Fett ist.

16. Zusammensetzung nach Anspruch 15, die 12—24 Gew.-% des Siliziumdioxids enthält.

17. Zusammensetzung nach Anspruch 15 oder 16, in der das Siliziumdioxid eine primäre Teilchengröße von weniger als 0,05 Mikron hat.

18. Zusammensetzung nach Anspruch 15, 16 oder 17, in der das Mineralöl ein schweres Mineralöl mit einem durchschnittlichen Molekulargewicht von 400 bis 450 ist.

19. Zusammensetzung nach einem der Ansprüche 15—18, in der das polymere Verdickungsmittel ein durchschnittliches Molekulargewicht von 40000 bis 45000 hat.

20. Zusammensetzung nach einem der Ansprüche 15—19, in der polymere Verdickungsmittel einen depolymerisierten Kautschuk umfaßt.

21. Zusammensetzung nach Anspruch 20, in der polymere Verdickungsmittel ein depolymerisierter Butylkautschuk ist.

22. Zusammensetzung nach einem der Ansprüche 15—21, in der das polymere Verdickungsmittel eine Brookfield-Viskosität bei 60°C von etwa 1 300 000 hat.

23. Zusammensetzung nach einem der Ansprüche 15—22, die aus mindestens 5 Gew.-% des polymeren Verdickungsmittels besteht.

24. Zusammenzetzung nach Anspruch 23, die aus 10 bis 30 Gew.-% des polymeren Verdickungsmittels besteht.

25. Zusammensetzung nach einem der Ansprüche 1—14, in der Form eines hydrophoben thixotropen Fettes.

26. Zusammensetzung nach einem der Ansprüche 15—25, die außerdem ein Antioxidans enthält.

27. Gespleißtes Kable, enthaltend:

a) einen gespleißten Kern;

b) eine äußere Hülle, die den Kern umgibt, und die, zur Ermöglichung des Spleißens, teilweise entfernt wurde, wodurch eine Spleißzone definiert wird;

c) ein Spleißgehäuse, das die Spleißzone von außen umgibt und sich quer in einem Abstand auf jeder Seite davon erstreckt, so daß das Spleißgehäuse die äußere Hülle überlappt; und

d) eine hydrophobe Füllzusammensetzung gemäß einem der Ansprüche 1—26, innerhalb des Spleißgehäuses, die die Kerne im wesentlichen abdichtet.

28. Gespleißtes Kabel nach Anspruch 27, in dem der Kern mindestens eine optische Faser ist.

29. Spleißkabel nach Anspruch 27, in dem der Kern elektrisch leitfähig ist.

30. Gespleißtes Kaxel nach Anspruch 29, in dem der Kern mahrere elektrische Leiter umfaßt.

31. Gespleißtes Kabel nach Anspruch 27, 28 oder 29, in dem das Spleißgehäuse eine rückgestellte polymere Manschette ist.

32. Gefülltes Kabel, enthaltend:

a) einen Kern;

b) eine Hülle, die den Kern umgibt;

c) eine Füllzusammensetzung gemäß einem der Ansprüche 1—26, die den Kern innerhalb der Hülle umgibt.

33. Gefülltes Kabel nach Anspruch 32, in dem die Füllzusammensetzung längs der Länge des Kabels angeordnet ist, um einen Kabelblock zu ergeben.

34. Anordnung zur Abdichtung eines Substrats gegenüber der Umwelt, enthaltend:

a) einen hohlen, rückstellbaren Gegenstand, der das Substrat umgeben kann, und der so rückgestellt werden kann, daß er das Substrat im wesentlichen einschließt; und

b) eine Füllzusammensetzung gemäß einem der Ansprüche 1—26, die das Substrat innerhalb des rückstellbaren Gegenstandes umgeben kann, unter Bildung einer Dichtung zwischen dem Substrat und dem Gegenstand, wenn er sich in seiner rückgestellten Form befindet.

35. Anordnung nach Anspruch 34, in der der rückstellbare hohle Gegenstand eine Manschette ist.

36. Anordnung nach Anspruch 34, in der der rückstellbare Gegenstand wärmerückstellbar ist.

37. Verfahren zur Herstellung eines hydrophoben thixotropen Fettes, welches umfaßt:

a) Herstellung einer Lösung, durch Auflösen eines polymeren Verdickungsmittels in einem Mineralöl mit einer Viskosität von mindestens 300 SUS bie 40°C und einem Fließpunkt von −10°C oder weniger;

b) Zusatz zu der Lösung von einem hydrophoben pyrogenen Siliziumdioxid; und

c) Vermischen der Lösung und des Siliziumdioxids unter Schereinwirkung, so daß das Siliziumdioxid ein Gitterwerk bildet, durch das die Lösung gänzlich dispergiert ist und durch das sie getragen wird.

38. Verfahren nach Anspruch 37, bei dem das polymere Verdickungsmittel ein depolymerisierter Butylkautschuk ist.

39. Verfahren nach Anspruch 38, bei dem das Mischen unter Scherwirkung bei einer Temperatur über 80°C durchgeführt wird.

40. Verfahren nach Anspruch 39, bei dem die Stufe (a) durch Vermischen des Öls und des polymeren Verdickungsmittels bei einer ersten Temperatur unter Erzielung eines weichen Gels durchgeführt wird, das weiche Gel auf eine zweite Temperatur zur Erzielung einer flüssigen Lösung erwärmt wird, und die Stufe (b) bei der zweiten Temperatur durchgeführt wird.

**Revendications**

1. Une composition de remplissage hydrophobe comprenant:

a) une huile minérale;

b) entre 6 et 30 pour cent en poids, sur la base du poids total de la composition, d'une silice fumée hydrophobe ayant une grosseur particulaire primaire inférieure à 0,05 microns; et

c) un épaississeur polymère, dissous sensiblement complètement dans l'huile minérale.

2. Une composition selon la revendication 1 qui comprend entre 12 et 24% en poids de la silice.

3. Une composition selon la revendication 1 ou 2, dans laquelle l'huile minérale est constituée essentiellement d'hydrocarbures saturés et est essentiellement exempte d'aromatiques.

4. Une composition selon la revendication 1, 2 ou 3, qui comprend, en outre, entre 0,01 et 10% en poids de cire microcristalline.

5. Une composition selon une quelconque revendication précédente, qui comprend, en outre, entre 0,01 et 20% en poids de microsphères hydrophobes en verre.

6. Une composition selon la revendication 1, dans laquelle l'épaississeur polymère est un caoutchouc dépolymérisé.

7. Une composition selon la revendication 6, dans laquelle l'épaississeur polymère est un caoutchouc butyle dépolymérisé.

8. Une composition selon la revendication 7, dans laquelle l'épaississeur polymère est un

21 **0 067 009** 22

copolymère qui comprend entre 80 et 98% en poids d'isobutylène et entre 2 et 20% en poids d'isoprène.

9. Une composition selon la revendication 1, qui comprend au moins 5% en poids de l'épaississeur polymère.

10. Une composition selon la revendication 9, qui comprend entre 10 et 30% en poids de l'épaississeur polymère.

11. Une composition selon une quelconque revendication précédente, dans laquelle le point de goutte est d'au moins 80°C.

12. Une composition selon l'une quelconque des revendications précédentes, ayant une viscosité de 30.000 poises ou moins à 1 hertz et à −10°C.

13. Une composition selon l'une quelconque des revendications précédentes, ayant une teneur en eau de 0,1% en poids ou moins.

14. Une composition selon l'une quelconque des revendications précédentes, qui comprend, en outre, un anti-oxydant.

15. Une composition de remplissage hydrophobe comprenant:
   a) sous forme d'un réseau, une silice fumée hydrophobe; et
   b) dispersée dans l'ensemble du réseau et supportée par ce réseau, une solution d'un épaississeur polymère dans une huile minérale, l'huile minérale ayant un point d'écoulement de −10°C ou moins et une viscosité d'au moins 300 SUS (63,4 centistockes) à 40°C;
   ladite composition de remplissage étant une graisse hydrophobe thixotropique.

16. Une composition selon la revendication 15, qui comprend entre 12 et 24% en poids de ladite silice.

17. Une composition selon la revendication 15 ou 16, dans laquelle ladite silice a une grosseur particulaire primaire inférieure à 0,05 microns.

18. Une composition selon la revendication 15, 16 ou 17, dans laquelle ladite huile minérale est une huile minérale lourde ayant un poids moléculaire moyen de 400 à 450.

19. Une composition selon l'une quelconque des revendications 15 à 18, dans laquelle ledit épaississeur polymère a un poids moléculaire moyen compris entre 40.000 et 45.000.

20. Une composition selon l'une quelconque des revendications 15 à 19, dans laquelle ledit épaississeur est en caoutchouc dépplymérisé.

21. Une composition selon la revendication 20, dans laquelle ledit épaississeur est un caoutchouc butyle dépolymérisé.

22. Une composition selon l'une quelconque des revendications 15 à 21, dans laquelle ledit épaississeur polymère a une viscosité Brookfield à 66°C d'environ 1.300.000.

23. Une composition selon l'une quelconque des revendications 15 à 22, qui comprend au moins 5% en poids dudit épaississeur polymère.

24. Une composition selon la revendication 23, qui comprend entre 10 et 30% en poids de l'épaississeur polymère.

25. Une composition selon l'une quelconque des revendications 1 à 14, sous la forme d'une graisse hydrophobe thixotropique.

26. Une composition selon l'une quelconque des revendications 15 à 25 qui comprend, en outre, un anti-oxydant.

27. Un câble épissé qui comprend:
   a) une âme épissée;
   b) une gaîne extérieure, entourant l'âme du câble, qui a été partiellement enlevée pour permettre l'épissage, formant ainsi une zone d'épissure;
   c) une boîte de jonction qui entoure extérieurement la zone d'épissure et s'étent transversalement sur une certaine distance, de part et d'autre de cette dernière, de sorte qui la boîte de jonction chevauche la gaîne extérieure; et
   d) la composition de remplissage hydrophobe selon l'une quelconque des revendications 1 à 26 contenue à l'intérieur de la boîte de jonction et assurant sensiblement l'étanchéité de l'âme.

28. Un câble épissé selon la revendication 27, dans lequel l'âme est constituée par au moins une fibre optique.

29. Un câble épissé selon la revendication 27, dans lequel l'âme est électriquement conductrice.

30. Un câble épissé selon la revendication 29, dans lequel l'âme comprend plusieurs conducteurs électriques.

31. Un câble épissé selon la revendication 27, 28, ou 29, dans lequel la boîte de jonction est recouverte par un manchon polymère.

32. Un câble rempli qui comprend:
   a) une âme;
   b) une gaîne entourant l'âme;
   c) une composition de remplissage selon l'une quelconque des revendications 1 à 26 entourant l'âme et contenue à l'intérieur de la gaîne.

33. Un câble rempli selon la revendication 32, dans lequel la composition de remplissage est localisée suivant la longueur du câble pour former une masse commune d'éléments de câbles.

34. Un ensemble pour assure l'étanchéité d'un substrat vis à vis du milieu environnant qui comprend:
   a) un objet creux à reprise de forme qui peut entourer le substrat et qui peut reprendre sensiblement sa forme pour enfermer le substrat; et
   b) une composition de remplissage selon l'une quelconque des revendications 1 à 26 qui peut entourer le substrat à l'intérieur de l'objet à reprise de forme pour former un joint étanche entre le substrat et l'objet lorsque ce dernier a repris sa forme.

35. Un ensemble selon la revendication 34 dans lequel l'objet creux à reprise de forme est un manchon.

36. Un ensemble selon la revendication 34, dans laquel l'objet à reprise de forme est à reprise thermique.

37. Un procédé de fabrication d'une graisse hydrophobe thixotropique qui consiste:
   a) à produire une solution en dissolvant un épaississeur polymère dans une huile minérale ayant une viscosité d'au moins 300 SUS à 40°C et un point d'écoulement de −10°C ou moins;

b) à ajouter à la solution une silice fumée hydrophobe; et

c) à mélanger avec cisaillement la solution et la silice pour provoquer la formation par la silice d'un réseau dans l'ensemble duquel la solution est dispersée et par laquelle elle est supportée.

38. Un procédé selon la revendication 37, dans lequel l'épaississeur polymère est un caoutchouc butyle dépolymérisé.

39. Un procédé selon la revendication 38, dans lequel le mélange avec cisaillement est effectué à une température supérieure à 80°C.

40. Un procédé selon la revendication 39, dans lequel l'étape (a) est effectuée par mélange de l'huile et de l'épaississeur polymère à une première température pour produire un gel mou, ledit gel mou est chauffé à une seconde température pour produire une solution liquide et l'étape (b) est effectuée à la seconde température.

Fig.1.

Fig.3.

Fig.2.

0 067 009